# EUROPEAN PATENT APPLICATION

(11) **EP 4 822 436 A1**
(43) Date of publication of application: **14.10.2026**
(21) Application number: 25778480.1
(22) Date of filing: 20.03.2025
(51) Int. Cl.: G03B 15/02, F21V 14/00, F21V 9/40

(54) **PHOTOGRAPHY/VIDEO RECORDING LIGHT**

(30) Priority: 25.03.2024 CN 202420594920 U; 27.09.2024 CN 202422376271 U
(71) Applicant: Godox Photo Equipment Co., Ltd., Shenzhen, Guangdong 518000 (CN)
(72) Inventor: ZENG, Weijun, Baoan District Shenzhen, Guangdong 518000 (CN); HUANG, Haiting, Baoan District Shenzhen, Guangdong 518000 (CN)
(74) Representative: Studio Torta S.p.A.
(86) International application number: PCT/CN2025/083744
(87) International publication number: WO 2025/201163

(57) **Abstract**

A photography/video recording light (100), comprising a light body (10), a light source (20), an electronically controlled film (30) and a power supply module, wherein the electronically controlled film (30) is disposed on a light-emission path of the light source (20), and light rays emitted by the light source (20) can pass through the electronically controlled film (30) and be emitted from the surface of the lamp body (10). The light transmittance of the electronically controlled film (30) can change on the basis of a received voltage value, so as to adjust the degree of haze of the electronically controlled film (30) or adjust the shade of a displayed color, such that the softness or color lightness of light rays, which are emitted by the light source (20), are adjusted.

## Description

This application claims priority to Chinese patent application No. 202420594920.X filed with the China National Intellectual Property Administration on March 25, 2024, titled "Photographic Light", and Chinese patent application No. 202422376271.9 filed on September 27, 2024, titled "Photography or video recording light". The entire contents of the above applications are incorporated by reference in this application.

### TECHNICAL FIELD

The present application relates to photography and videography equipment, and in particular to a photography or video recording light.

### BACKGROUND

At present, in the field of photography and videography, photographers have relatively high requirements for lighting. In order to achieve better lighting effects in photographs or videos, photographic lighting is often required for auxiliary lighting during shooting.

In order to achieve different lighting effects, photographers generally additionally install a diffuser cover or a color filter on photographic lighting. The diffuser cover may soften the light emitted by the photographic lighting before the light is irradiated onto a photographed person or object, and the color filter may change the color of the light irradiated onto the photographed person or object.

However, at a shooting site, it is often necessary to adjust the softness of light and the brightness of the color of the light according to different lighting effect requirements. At present, users may only replace diffuser covers having different haze levels and color filters having different light transmittances. Such operation is very cumbersome, cannot well satisfy the fast pace at the shooting site, and affects the user experience of users.

### SUMMARY

An objective of the present utility model is to solve the technical problem in the prior art that, at a shooting site, it is often necessary to adjust the light softness and the brightness of colors according to different lighting effect requirements, and at present users may only replace diffuser covers having different haze levels and color filters having different light transmittances, such operation being very cumbersome, failing to well satisfy the fast pace at the shooting site, and affecting the user experience of users.

In order to solve the above technical problem, the present utility model provides a photography or video recording light, which includes:
a light body, where a mounting space is defined in the light body;
a light source, disposed on the light body and arranged in the mounting space, where light emitted by the light source may be emitted from a surface of the light body;
an electrically controlled film, arranged in the mounting space and disposed on a light emission path of the light source; where a light transmittance of the electrically controlled film may vary according to a voltage value received thereby;
a power supply module, arranged in the light body and electrically connected to the electrically controlled film and the light source, where the power supply module is configured to respectively output voltages to the electrically controlled film and the light source, so as to drive the light source to emit light and adjust the light transmittance of the electrically controlled film, thereby adjusting the haze level or displayed color depth of the electrically controlled film, thereby further changing the softness of the light or the brightness of the color of the light emitted after passing through the electrically controlled film.

In some embodiments of the present application, the electrically controlled film is an electrically controlled frosted film, and the electrically controlled frosted film includes liquid crystal molecules. A liquid crystal molecule arrangement pattern in the electrically controlled frosted film may change according to a voltage value received by the electrically controlled frosted film, such that the haze level of the electrically controlled frosted film may vary according to the voltage value received thereby.

In some embodiments of the present application, the electrically controlled film is an electrically controlled dimming film, and the electrically controlled dimming film includes one or more dimming layers, where each dimming layer contains liquid crystal molecules of one color; and the color depth of the electrically controlled dimming film may vary according to a voltage value received thereby.

In some embodiments of the present application, the electrically controlled dimming film includes a plurality of dimming layers containing the liquid crystal molecules, and colors of the liquid crystal molecules in each dimming layer are different from each other.

In some embodiments of the present application, the light body includes a housing body and a light cover disposed on the housing body, where the mounting space is enclosed and formed between the light cover and the housing body. Light from the light source is emitted through the light cover, and the electrically controlled film is disposed on an inner wall of the light cover.

In some embodiments of the present application, the light cover is detachably disposed on the housing body, and the photography or video recording light further includes a control circuit board, as well as a conductive terminal and a conductive socket capable of conductive docking.

The control circuit board is disposed inside the housing body. The conductive socket is disposed on a surface of the housing body, and is electrically connected to the control circuit board, and the control circuit board is electrically connected to the power supply module. The conductive terminal is disposed on the electrically controlled film. When the light cover is connected to the housing body, the conductive terminal is docked with the conductive socket, such that a voltage output by the power supply module is transmitted to the electrically controlled film through the conductive socket and the conductive terminal.

In some embodiments of the present application, a connection groove is defined in a side edge of the housing body, and a connection block is disposed on a side edge of the light cover. The connection block is capable of being engaged in the connection groove, such that the light cover is detachably connected to the housing body.

In some embodiments of the present application, a connection block is disposed on a side surface of the housing body, and a connection groove is defined in a side edge of the light cover. The connection block is capable of being engaged in the connection groove, such that the light cover is detachably connected to the housing body.

In some embodiments of the present application, the photography or video recording light is a tube light. The light cover and the electrically controlled film are both arc-shaped, and the electrically controlled film is attached to and covers the inner wall of the light cover.

In some embodiments of the present application, the photography or video recording light is a panel light. The light cover and the electrically controlled film are both of a flat plate structure, and the electrically controlled film is attached to and covers the inner wall of the light cover.

In some embodiments of the present application, the photography or video recording light further includes a control circuit board and a wire. The control circuit board is disposed inside the light body, and is electrically connected to the power supply module. The electrically controlled film is electrically connected to the control circuit board through the wire, such that a voltage output by the power supply module is transmitted to the electrically controlled film through the wire.

In some embodiments of the present application, the light body includes a housing body and a light cover disposed on the housing body, where the mounting space is enclosed and formed between the light cover and the housing body. Light from the light source is emitted through the light cover, the electrically controlled film is disposed on the inner wall of the light cover, and the light cover and the housing body are of an integrally formed structure.

In some embodiments of the present application, the photography or video recording light further includes a control circuit board disposed in the light body, where the control circuit board is electrically connected to the electrically controlled film so as to output a voltage to the electrically controlled film, and the haze level and color depth of the electrically controlled film may vary according to a voltage value received thereby.

In some embodiments of the present application, the photography or video recording light further includes a handle. The power supply module is disposed inside the handle, the handle is connected to the light body, and the power supply module is capable of being electrically connected to the light source on the light body.

In some embodiments of the present application, the photography or video recording light further includes a control button disposed on the handle housing. The control button is electrically connected to the control circuit board and is configured to control a voltage value output by the control circuit board to the electrically controlled film, so as to adjust the haze level and color depth of the electrically controlled film.

It may be known from the above technical solutions that beneficial effects of the present utility model are as follows: the photography or video recording light of the present utility model includes a light body, a light source, an electrically controlled film, and a power supply module. The electrically controlled film is disposed on the light emission path of the light source, and light emitted by the light source may be emitted from a surface of the light body through the electrically controlled film. The light transmittance of the electrically controlled film may vary according to a voltage value received thereby, thereby adjusting the haze level or displayed color depth of the electrically controlled film so as to adjust the light softness or color brightness of light emitted by the light source, such that users may adjust the light softness and brightness without replacing diffuser covers of different specifications or color filters having different light transmittances. The photography or video recording light has a simple overall structure and is convenient to operate, may well satisfy different shooting requirements and the fast pace at a shooting site, thus ensuring a high-quality user experience for users.

### BRIEF DESCRIPTION OF DRAWINGS

FIG. 1 is a schematic diagram of a photography or video recording light according to an embodiment of the present utility model.
FIG. 2 is an exploded view of the photography or video recording light shown in FIG. 1.
FIG. 3 is a cross-sectional view of the photography or video recording light shown in FIG. 1.
FIG. 4 is an exploded view of FIG. 3.
FIG. 5 is a schematic diagram of a light cover and an electrically controlled film in the photography or video recording light shown in FIG. 1.
FIG. 6 is a schematic diagram of a photography or video recording light according to another embodiment of the present utility model.
FIG. 7 is an exploded view of FIG. 6.
FIG. 8 is a schematic diagram of a photography or video recording light according to another embodiment of the present utility model.
FIG. 9 is a schematic diagram of a photography or video recording light according to yet another embodiment of the present utility model.
FIG. 10 is a schematic diagram of a photography or video recording light according to still another embodiment of the present utility model.
FIG. 11 is a partial cross-sectional view of the structure shown in FIG. 10.

Reference numerals are described as follows: 100, photography or video recording light; 10, light body; 101, mounting space; 102, mounting groove; 11, housing body; 12, light cover; 13, connection groove; 14, connection block; 141, main body portion; 142, engaging portion; 20, light source; 30, electrically controlled film; 40, handle; 51, conductive terminal; 52, conductive socket; 60, control button; 71, first contact pad; 72, second contact pad; 81, detachable connector; 82, conductive contact.

### DETAILED DESCRIPTION OF EMBODIMENTS

Typical embodiments illustrating the features and advantages of the present utility model are described in detail in the following description. It should be understood that the present utility model may have various modifications in different embodiments, all of which fall within the scope of the present utility model. The descriptions and illustrations are intended for explanatory purposes and are not meant to limit the utility model.

As used herein, it should be understood that directional or positional indications (such as up, down, left, right, front, and back) in the illustrated embodiments are provided only for ease of description and simplification, and do not indicate or imply that the devices or elements must have a specific orientation or be constructed and operated in a specific orientation. The descriptions are appropriate when the elements are positioned as shown in the figures. If the positions of these elements change, the directional indications also change accordingly.

Furthermore, the terms "first" and "second" are used only for descriptive purposes and should not be understood as indicating relative importance or implicitly specifying the number of technical features. Accordingly, features designated as "first" or "second" may explicitly or implicitly include one or more of the features. As used herein, the term "plurality" means two or more, unless otherwise explicitly specified.

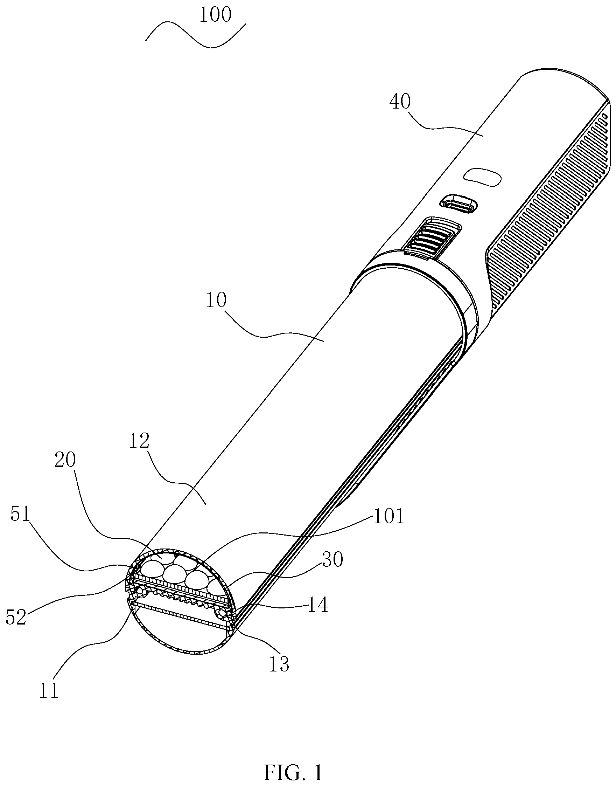

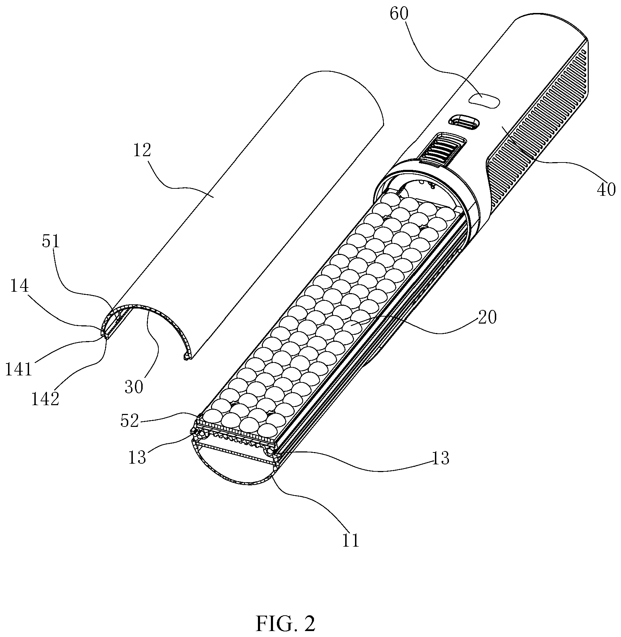

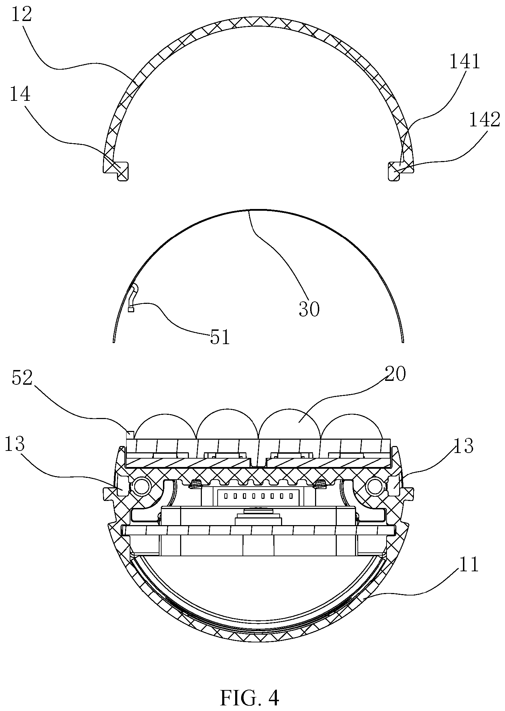

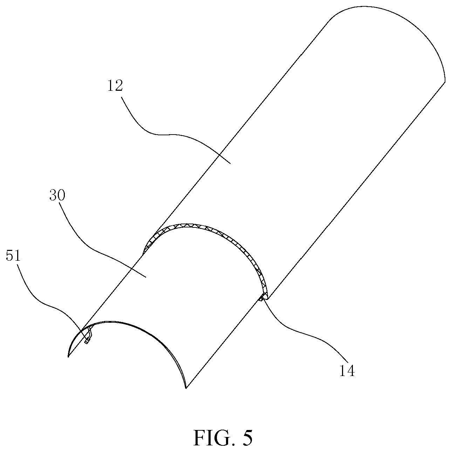

Referring to FIGS. 1 to 5, an embodiment of the present application provides a photography or video recording light 100, which includes a light body 10, a light source 20, an electrically controlled film 30, and a power supply module.

A mounting space 101 is disposed in the light body 10. The light source 20 is disposed on the light body 10 and arranged in the mounting space 101, and light emitted from the light source 20 may exit from a surface of the light body 10. The electrically controlled film 30 is disposed in the mounting space 101 and arranged on a light emission path of the light source 20, and a light transmittance of the electrically controlled film 30 varies according to a received voltage value.

The power supply module is disposed in the light body 10 and is electrically connected to the light source 20 and the electrically controlled film 30 respectively. The power supply module is used to output voltages to the electrically controlled film 30 and the light source 20 respectively, thereby driving the light source to emit light and adjusting a light transmittance of the electrically controlled film 30, so as to adjust a haze level or color intensity of the electrically controlled film 30, thereby changing softness or brightness of light emitted after passing through the electrically controlled film 30.

As shown in FIG. 1, the photography or video recording light 100 may be a tube light, which is a portable photography device commonly used in outdoor photography scenes.

The photography or video recording light 100 may further include a handle 40, which may be held by a user during use to facilitate operation of the photography or video recording light 100. The handle 40 includes a handle housing, and the power supply module is disposed inside the handle housing. The handle 40 is connected to the light body 10, and the power supply module may be electrically connected to the light source 20 on the light body 10 for supplying power to the light source 20.

The handle 40 may be detachably connected to the light body 10. Specifically, a first electrical connection terminal is disposed on an end surface of the handle 40, and a second electrical connection terminal electrically connected to the power supply module is disposed on an end surface of the handle housing. When the handle 40 is detachably coupled to the light body 10, the first electrical connection terminal is in contact with the second electrical connection terminal, such that the power supply module may supply power to the light source 20.

The first electrical connection terminal and the second electrical connection terminal may be a pogo pin and a contact pad. When the first electrical connection terminal is a pogo pin, the second electrical connection terminal is a contact pad; when the first electrical connection terminal is a contact pad, the second electrical connection terminal is a pogo pin.

The handle 40 and the light body 10 may be configured to be detachably fixed by a snap-fit structure, where the light body 10 is snapped onto the handle 40, the first electrical connection terminal is in contact with the second electrical connection terminal, and the power supply module of the handle 40 may supply power to the light source 20 through the first electrical connection terminal and the second electrical connection terminal, thereby enabling the light source 20 to emit light.

In an embodiment of the present application, the light body 10 includes a housing body 11 and a light cover 12 disposed on the housing body 11, and a mounting space 101 is defined between the light cover 12 and the housing body 11.

The photography or video recording light 100 may be a tube light, and a light body of the tube light may be formed in a cylindrical shape to facilitate user gripping. The light body 10 may be formed in a cylindrical shape. An outer contour of a cross-section of the housing body 11 is semi-circular, and the light cover 12 is arc-shaped. The light cover 12 and the housing body 11 together define a circular outer contour.

In other embodiments, the tube light may be formed not with a circular outer contour, but with a square shape, a triangular shape, or other regular or irregular shapes. The light cover 12 and the housing body 11 are correspondingly formed in matching shapes.

The light source 20 may include a plurality of LED light beads, which are arranged in an array on a surface of the housing body 11 facing the light cover 12. Light emitted by the LED light beads may pass through a transparent light cover 12. In other embodiments, the light source 20 may also be implemented as other light-emitting elements according to usage requirements.

In an embodiment of the present application, the light cover 12 is detachably disposed on the housing body 11. By providing a detachable connection between the light cover 12 and the housing body 11, replacement and maintenance of the light source 20 may be facilitated, thereby improving a service life of the photography or video recording light 100.

Connection grooves 13 are disposed on both sides of the housing body 11 in a width direction, and an extension direction of each of the connection grooves 13 is consistent with a length direction of the housing body 11. In a thickness direction of the housing body 11, a position where the connection groove 13 is disposed on the housing body 11 is lower than a surface of the housing body 11 provided with the light source 20.

Connection blocks 14 are disposed on both sides of the light cover 12, and the connection blocks 14 are disposed on an inner side wall of the light cover 12. In the thickness direction of the housing body 11, the connection groove 13 is recessed in a direction away from the light source 20, and an edge of the connection groove 13 and a side edge of the housing body 11 form a step-shaped structure.

The connection block 14 includes a main body portion 141 and a clamping portion 142, where the main body portion 141 is connected to an inner surface of the light cover 12 and disposed near an edge of the light cover 12. The clamping portion 142 is bent and connected to an end of the main body portion 141 facing away from the light cover 12, and the clamping portion 142 extends in a direction away from the light cover 12.

When the light cover 12 is connected to the housing body 11, the clamping portion 142 of the connection block 14 is engaged in the connection groove 13, and an end surface at a connection portion between the main body portion 141 and the light cover 12 abuts against a surface of the housing body 11 near the connection groove 13, so that the light cover 12 is stably snapped onto the housing body 11.

In other examples of the present application, the connection block 14 may also be disposed on the housing body 11, and the connection groove 13 may be formed in the light cover 12, and the detachable connection of the light cover 12 to the housing body 11 is realized through engagement between the connection block 14 and the connection groove 13.

In other examples, the light cover 12 and the housing body 11 may also be detachably connected by other means, such as a snap-and-hook cooperation structure or magnetic attraction.

In addition, in some embodiments of the present application, the light cover 12 and the housing body 11 may be formed as an integrally formed structure, that is, the light cover 12 and the housing body 11 may be integrally formed to ensure structural stability of the photography or video recording light 100.

The electrically controlled film 30 is disposed in the mounting space 101 and arranged on a light emission path of the light source 20. A light transmittance of the electrically controlled film 30 varies according to a received voltage value, so as to adjust brightness of light emitted by the light source 20.

In the present application, the electrically controlled film 30 may be a thin film made of a special material, which typically includes two outer protective films and one or more layers of thin-film material disposed between the two outer protective films.

In some embodiments of the present application, the electrically controlled film 30 may be an electrically controlled frosted film, which changes its haze level in response to variations of an alternating voltage. Specifically, the electrically controlled frosted film is based on an electrochromic effect and rearrangement of liquid crystal molecules under an electric field to achieve variation of haze level.

When the electrically controlled frosted film is powered off, liquid crystal molecules are randomly arranged, causing light to scatter in all directions, so that the film presents a frosted or milky opaque state. When the electrically controlled frosted film is powered on, liquid crystal molecules are aligned in a direction perpendicular to the film, allowing light to pass through smoothly, thereby presenting a transparent state. The transition between the transparent state and the opaque state may be completed instantly, thereby achieving different fogging and clear effects.

That is, by changing a voltage value applied to the electrically controlled frosted film, a haze level of the electrically controlled frosted film may be adjusted, thereby changing softness of the photography or video recording light 100.

In some embodiments of the present application, the electrically controlled film 30 may also be an electrically controlled dimming film, which includes one or more dimming layers containing liquid crystal molecules, and each dimming layer includes liquid crystal molecules of one color. The liquid crystal molecules may be white, black, red, green, blue, and other colors. Taking blue liquid crystal molecules as an example, when energized, the dimming layer presents a transparent state, and as voltage decreases, the corresponding color of the liquid crystal molecules gradually appears in the dimming layer, changing from light blue to dark blue.

In this embodiment, the photography or video recording light 100 may further include a control circuit board disposed in the light body 10, and the control circuit board may be electrically connected to the electrically controlled dimming film.

In the electrically controlled dimming film, multiple dimming layers containing liquid crystal molecules may be stacked, where liquid crystal molecules in each dimming layer have different colors, such as a first layer being red, a second layer being blue, and a third layer being green; the control circuit board outputs voltages to each dimming layer respectively, so that color intensity of each dimming layer changes accordingly.

If red is required, the first layer is powered off while the other two layers are powered on, so that the electrically controlled dimming film displays red; if purple is required, the first and second layers are powered off while the third layer is powered on, so that the electrically controlled dimming film displays purple formed by mixing red and blue, thereby enabling multiple colors through combination of the three layers.

In some embodiments of the present application, the electrically controlled film 30 may be disposed on the housing body 11 or directly cover and be fixed on the light source 20, and light emitted from the light source 20 may directly pass through the electrically controlled film 30.

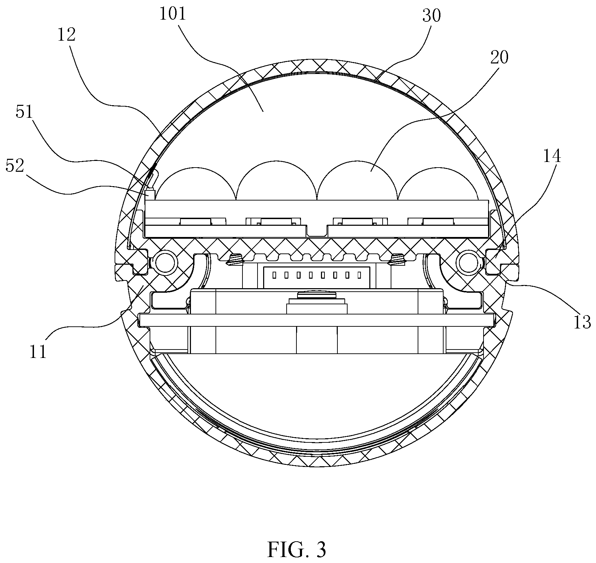

As shown in FIGS. 3 to 5, in other examples of the present application, the electrically controlled film 30 may be disposed on an inner wall of the light cover 12. When the photography or video recording light 100 is a tube light, the electrically controlled film 30 corresponding to the shape of the light cover 12 may also be formed in an arc shape. The electrically controlled film 30 may completely cover an inner surface of the light cover 12.

Both side edges of the electrically controlled film 30 abut against a connection portion between the connection blocks 14 and the light cover 12, and the electrically controlled film 30 may be fixed to the inner wall of the light cover 12 by adhesion.

In some examples, the light cover 12 is detachably connected to the housing body 11, and when the light cover 12 is in a detached state, the light cover 12 and the housing body 11 are separated from each other.

In this example, the photography or video recording light 100 may further include a conductive terminal 51 and a conductive socket 52 capable of electrical docking.

The control circuit board is disposed inside the housing body 11 and is electrically connected to the power supply module, and the conductive socket 52 is disposed on a surface of the housing body 11 and is electrically connected to the control circuit board. The conductive terminal 51 is disposed on the electrically controlled film 30, and when the light cover 12 is connected to the housing body 11, the conductive terminal 51 is docked with the conductive socket 52.

By docking the conductive terminal 51 with the conductive socket 52, an electrical connection between the power supply module and the electrically controlled film 30 is established, so that the control circuit board controls the power supply module to output different voltages to the electrically controlled film 30, enabling the electrically controlled film 30 to vary according to a received voltage value.

In other embodiments of the present application, the light cover 12 and the housing body 11 are an integrally formed structure, that is, the light cover 12 and the electrically controlled film 30 are not separable from the housing body 11. In this embodiment, the electrically controlled film 30 may be electrically connected to the power supply module through a wire.

In addition, the photography or video recording light 100 may further include a control button 60, and the control button 60 is disposed on the handle housing. The control button 60 is electrically connected to the control circuit board and is used to control a voltage value output by the control circuit board to the electrically controlled film 30, so as to adjust a light transmittance of the electrically controlled film 30.

When using the photography or video recording light 100, a user holds the handle 40 and may press the control button 60 with a thumb to adjust a light transmittance of the electrically controlled film 30, thereby adjusting brightness of light of the photography or video recording light 100 to select appropriate lighting in real time.

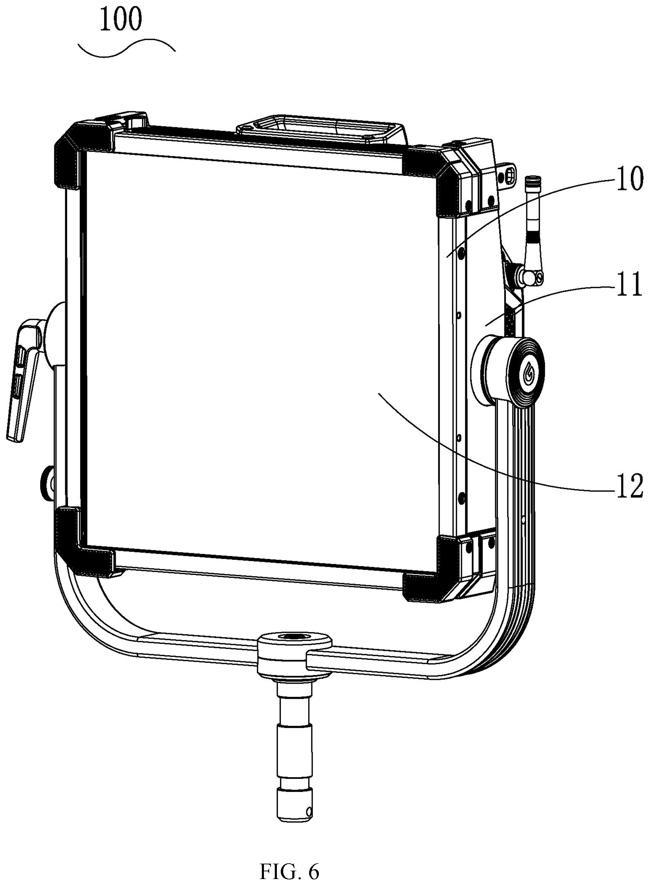

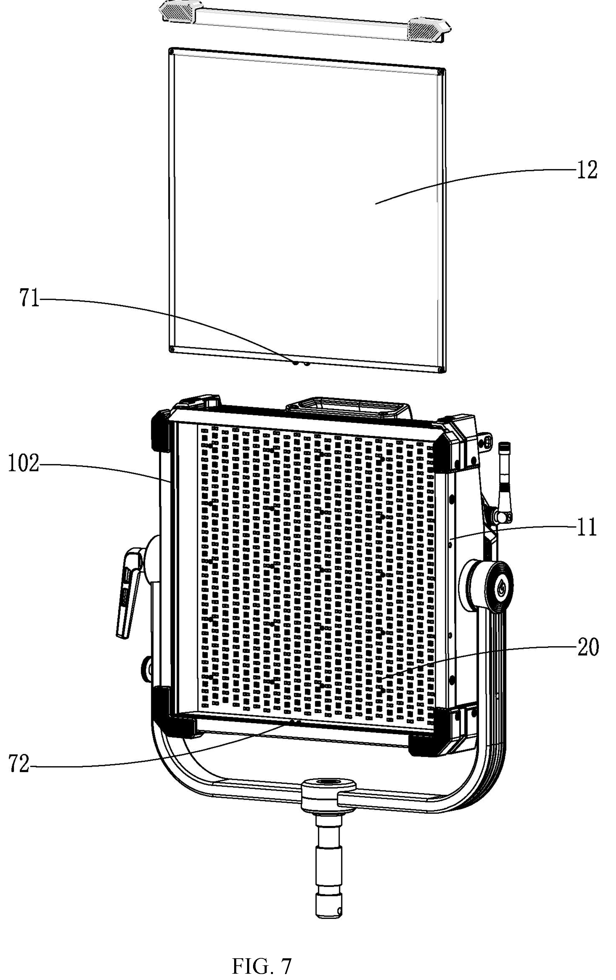

Referring to FIGS. 6 and 7, in other examples of the present application, the photography or video recording light 100 may also be a panel light. The light body 10 of the photography or video recording light 100 includes a housing body 11 and a light cover 12 disposed on the housing body 11. The housing body 11 is a main structure of the panel light, and has a structure substantially the same as that of a conventional panel light.

The main difference from the above embodiment is that a mounting groove 102 is recessed in a surface of the housing body 11, the light cover 12 is disposed at an opening of the mounting groove 102, and the electrically controlled film 30 is disposed on an inner wall of the light cover 12; both the light cover 12 and the electrically controlled film 30 are flat plate structures.

The light cover 12 and the housing body 11 may be detachably connected, and in this example, the photography or video recording light 100 may further include a control circuit board, a first contact 71, and a second contact pad 72 capable of electrical docking.

The control circuit board is disposed inside the housing body 11 and is electrically connected to the power supply module, and the second contact pad 72 is disposed on a surface of the housing body 11 and is electrically connected to the control circuit board. The first contact 71 is disposed on the electrically controlled film 30, and when the light cover 12 is connected to the housing body 11, the first contact 71 is in contact with the second contact pad 72.

By contact cooperation between the first contact 71 and the second contact pad 72, an electrical connection between the control circuit board and the electrically controlled film 30 is established, so that the control circuit board controls the power supply module to output different voltages to the electrically controlled film 30, enabling the electrically controlled film 30 to vary according to a received voltage value.

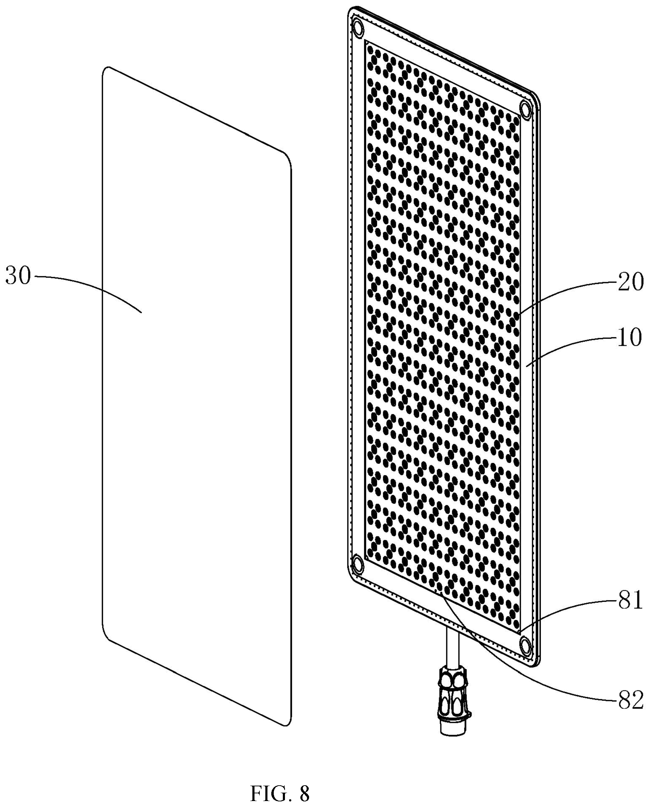

Referring to FIG. 8, in other examples of the present application, the photography or video recording light 100 may also be a flexible light, where the light body 10 and the electrically controlled film 30 of the flexible light are both flexible pieces, and the electrically controlled film 30 covers a surface of the light body 10. Therefore, the light body 10 and the electrically controlled film 30 may be rolled up and stored together.

The light body 10 and the electrically controlled film 30 of the flexible light may be detachably connected. In this example, the light body 10 and the electrically controlled film 30 may be connected via a detachable connector 81, where the detachable connector 81 may include Velcro, snap buttons, or magnetic components. In this example, the photography or video recording light 100 may further include a control circuit board and a conductive contact 82 capable of electrical docking. The conductive contact 82 enables an electrical connection between the control circuit board and the electrically controlled film 30, so that the control circuit board controls the power supply module to output different voltages to the electrically controlled film 30, enabling a light transmittance of the electrically controlled film 30 to vary according to a received voltage value.

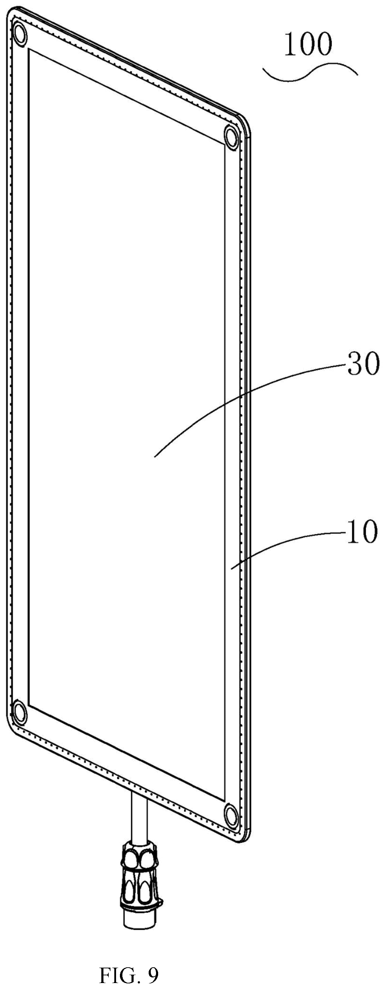

Referring to FIG. 9, in other embodiments, the light body 10 and the electrically controlled film 30 of the flexible light may be configured as a fixed structure, where the electrically controlled film 30 is directly attached to a light-emitting surface of the light body 10.

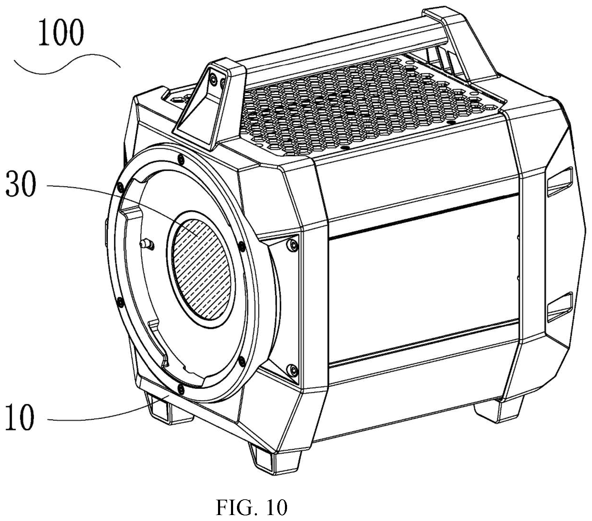

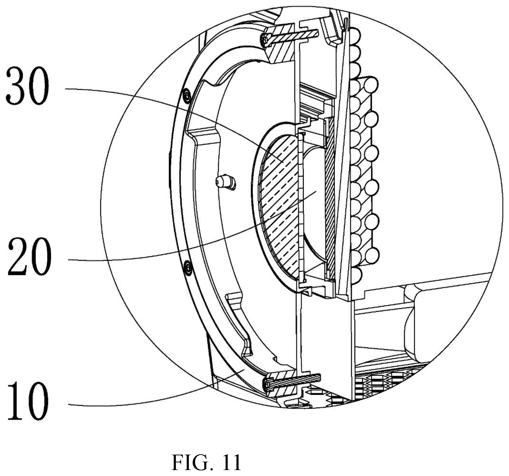

Referring to FIGS. 10 and 11, in other examples of the present application, the photography or video recording light 100 may be an LED STUDIO LIGHT, where the light source 20 is a COB (Chip On Board) light source, and the electrically controlled film 30 is covered on a light-emitting surface of the COB light source through a transparent plate.

The COB light source is a high-power integrated surface light source, which is a high-luminous-efficiency integrated surface light source technology in which LED chips are directly mounted on a mirror-finished metal substrate with high reflectivity, and the transparent plate may be a heat-insulating glass plate. The light body 10 of the LED studio light has a structure substantially similar to that of a conventional LED studio light.

In addition, in addition to the tube light, panel light, flexible light, and LED studio light shown in the present application, the photography or video recording light 100 may also be implemented as other lighting devices, such as a flash light, spotlight, or mood light, etc.

The photography or video recording light of the present application includes a light body, a light source, an electrically controlled film, and a power supply module, where the electrically controlled film is arranged on a light emission path of the light source, and light emitted from the light source is emitted from a surface of the light body through the electrically controlled film. The light transmittance of the electrically controlled film may vary according to a voltage value received thereby, thereby adjusting the haze level or displayed color depth of the electrically controlled film so as to adjust the light softness or color brightness of light emitted by the light source, such that users may adjust the light softness and brightness without replacing diffuser covers of different specifications or color filters having different light transmittances. The photography or video recording light has a simple overall structure and is convenient to operate, may well satisfy different shooting requirements and the fast pace at a shooting site, thus ensuring a high-quality user experience for users.

Although the present utility model has been described with reference to several typical implementations, it should be understood that the terms used are illustrative and exemplary rather than restrictive. Since the present utility model may be implemented in various forms without departing from the spirit or essence of the utility model, it should be understood that the above implementations are not limited to any of the foregoing details, but should be broadly interpreted within the spirit and scope defined by the appended claims, and all modifications and variations falling within the scope of the claims or their equivalents are intended to be covered by the appended claims.

## Claims

1. A photography or video recording light, comprising:
a light body, wherein a mounting space is defined in the light body;
a light source, disposed on the light body and arranged in the mounting space, wherein light emitted by the light source is operative to be emitted outwards from a surface of the light body;
an electrically controlled film, disposed in the mounting space and arranged on a light emission path of the light source, wherein a light transmittance of the electrically controlled film is variable depending on a received voltage value; and
a power supply module, disposed in the light body and electrically connected to the electrically controlled film and to the light source, the power supply module being configured to output voltages to the electrically controlled film and the light source, respectively, driving the light source to emit light and adjusting a light transmittance of the electrically controlled film so as to adjust a haze level or color intensity of the electrically controlled film, thereby changing a softness or brightness of the light emitted after passing through the electrically controlled film.

2. The photography or video recording light of claim 1, wherein the electrically controlled film is an electrically controlled frosted film, the electrically controlled frosted film comprising liquid crystal molecules; wherein an arrangement pattern of the liquid crystal molecules in the electrically controlled frosted film is operative to be changed depending on a voltage value received by the electrically controlled frosted film, such that the haze level of the electrically controlled frosted film is variable depending on the received voltage value.

3. The photography or video recording light of claim 1, wherein the electrically controlled film is an electrically controlled dimming film, the electrically controlled dimming film comprising one or more dimming layers, each of the one or more dimming layers comprising liquid crystal molecules of one color, and wherein a color intensity of the electrically controlled dimming film is variable depending on the received voltage value.

4. The photography or video recording light of claim 3, wherein the electrically controlled dimming film comprises a plurality of dimming layers each comprising liquid crystal molecules, and wherein the liquid crystal molecules in different dimming layers have different colors.

5. The photography or video recording light of claim 1, wherein the light body comprises a housing body and a light cover disposed on the housing body, wherein the light cover and the housing body cooperate to define the mounting space therebetween, wherein the light emitted by the light source is emitted outwards through the light cover, and wherein the electrically controlled film is disposed on an inner wall of the light cover.

6. The photography or video recording light of claim 5, wherein the light cover is detachably disposed on the housing body, and wherein the photography or video recording light further comprises a control circuit board, a conductive terminal, and a conductive socket; wherein the control circuit board is disposed inside the housing body, the conductive socket is disposed on a surface of the housing body and is electrically connected to the control circuit board, and the control circuit board is electrically connected to the power supply module;
wherein the conductive terminal is disposed on the electrically controlled film, and when the light cover is connected to the housing body, the conductive terminal is mated with the conductive socket such that the voltage output by the power supply module is transmitted to the electrically controlled film via the conductive socket and the conductive terminal.

7. The photography or video recording light of claim 6, wherein a connection groove is defined in a side of the housing body, a connection block is disposed on a side of the light cover, and wherein the connection block is configured to be engaged with the connection groove such that the light cover is detachably connected to the housing body.

8. The photography or video recording light of claim 6, wherein a connection block is disposed on a side surface of the housing body, a connection groove is disposed in a side of the light cover, and wherein the connection block is configured to be engaged with the connection groove, such that the light cover is detachably connected to the housing body.

9. The photography or video recording light of claim 5, wherein the photography or video recording light is a tube light, wherein the light cover and the electrically controlled film are each arc-shaped, and wherein the electrically controlled film is attached to and covers an inner wall of the light cover.

10. The photography or video recording light of claim 5, wherein the photography or video recording light is a panel light, wherein the light cover and the electrically controlled film are each a flat plate structure, and wherein the electrically controlled film is attached to and covers an inner wall of the light cover.

11. The photography or video recording light of claim 1, further comprising a control circuit board and a wire, wherein the control circuit board is disposed inside the light body and is electrically connected to the power supply module, and wherein the electrically controlled film is electrically connected to the control circuit board via the wire such that the voltage output by the power supply module is transmitted to the electrically controlled film via the wire.

12. The photography or video recording light of claim 11, wherein the light body comprises a housing body and a light cover disposed on the housing body, the light cover and the housing body cooperating to define the mounting space therebetween, wherein the light emitted by the light source is emitted outwards through the light cover, the electrically controlled film is disposed on an inner wall of the light cover, and the light cover and the housing body are an integrally formed structure.

13. The photography or video recording light of claim 1, wherein the photography or video recording light further comprises a control circuit board disposed in the light body, the control circuit board is electrically connected to the electrically controlled film to output a voltage to the electrically controlled film, and wherein a haze level and a color intensity of the electrically controlled film are variable depending on the received voltage value.

14. The photography or video recording light of claim 13, further comprising a handle, wherein the power supply module is disposed inside the handle, the handle is connected to the light body, and the power supply module is electrically connected to the light source on the light body.

15. The photography or video recording light of claim 14, further comprising a control button disposed on a housing of the handle, wherein the control button is electrically connected to the control circuit board and is configured to control a voltage value output from the control circuit board to the electrically controlled film so as to adjust a haze level and a color intensity of the electrically controlled film.
